Europäisches Patentamt

European Patent Office

Office européen des brevets

(11) Veröffentlichungsnummer: **0 467 067 A2**

# EUROPÄISCHE PATENTANMELDUNG

(21) Anmeldenummer: **91109629.5**

(51) Int. Cl.5: **B41M 3/14**

(22) Anmeldetag: **12.06.91**

(30) Priorität: **18.07.90 DE 4022822**

(43) Veröffentlichungstag der Anmeldung:
**22.01.92 Patentblatt 92/04**

(84) Benannte Vertragsstaaten:
**AT BE CH DE DK ES FR GB GR IT LI LU NL SE**

(71) Anmelder: **HEINRICH BAUER VERLAG**
**Burchardstrasse 11**
**W-2000 Hamburg 1(DE)**

(72) Erfinder: **Pingel, Horst**
**Albert-Dimmers-Strasse 41**
**W-5060 Bergisch Gladbach 2(DE)**
Erfinder: **Griebel, Rudolf, Dr. Dipl.-Chem.**
**An der Herrenwiese 13**
**W-5200 Siegburg(DE)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1(DE)**

(54) **Druckträger und Verfahren zu seinem Bedrucken.**

(57) Druckträger (11) mit mindestens einer bedruckten Oberfläche, auf der für das menschliche Auge sichtbare erste Informationsträger (15a, 15b) mit im unsichtbaren Spektralbereich durchlässigen Druckfarben und für das menschliche Auge unsichtbare codierte Informationsträger (16) mit einem im sichtbaren Spektralbereich durchsichtigen, in einem unsichtbaren Spektralbereich jedoch absorbierenden Klarlack übereinander gedruckt sind, so daß dem Druckträger (11) an denjenigen Stellen, an denen sich die lesbaren Informationen befinden, auch hierzu gehörende Krypto-Informationen mit einem geeigneten Lesegerät des unsichtbaren Spektralbereiches entnommen und zum Programmieren oder Steuern anderer Geräte verwendet werden können, deren Funktion mit den auf dem Druckträger eingedruckten lesbaren Informationen im Zusammenhang steht.

FIG.2

Die Erfindung betrifft einen Druckträger mit mindestens einer bedruckten Oberfläche (Druckfläche), die mindestens zwei übereinander und/oder nebeneinander bedruckte Informationsschichten aufweist, von denen die erste Informationsschicht für das menschliche Auge sichtbare, aus Druckfarben bestehende erste Informationsträger enthält und von denen mindestens eine zweite Informationsschicht für ein Lesegerät des unsichtbaren Spektralbereiches erkennbare, aus einem druckfähigen Stoff bestehende, zweite Informationsträger aufweist, wobei der druckfähige Stoff für das menschliche Auge weitgehend oder vollständig unsichtbar ist.

Es ist bekannt, auf Warenverpackungen oder anderen Druckträgern Barcodes anzubringen, die neben anderen schriftlichen oder bildlichen Informationen mit gewöhnlich schwarzer Druckfarbe auf die Warenverpackung aufgedruckt werden und Zusatzinformationen in codierter Form darstellen, die mit sogenannten Barcode-Leser, Scannern oder Lichtgriffeln erfaßt und entweder direkt einer Datenverarbeitung zugeführt oder durch Bildwandler in Form von Buchstaben oder Zahlen lesbar gemacht werden können. Hierbei ist es auch bekannt, zum Steuern der Weichen eines Fördersystems die auf diesem transportierten Pakete mit einem aus groben Strichen gebildeten Strichcode zu versehen, der von Lesern gelesen werden kann, die den einzelnen Weichen zugeordnet sind und diese so steuern, daß das entsprechende Paket sein jeweiliges Ziel erreicht (DE-OS 37 01 329). Die Striche werden hierbei von einer Spritzdüse mit unsichtbarer Farbe erzeugt, die einen hohen Anteil von Luminophoren hat und unter Anregung von UV-Licht längerwellig luminesziert.

Es gibt auch bereits Sonderdrucke von Funk- und Fernsehprogrammzeitschriften, bei denen neben den Texten Barcodes gedruckt sind, welche Daten enthalten, mit denen Aufzeichnungs- und Abspielgeräte der Unterhaltungselektronik nach den Programmfolgen der Funk- und Fernsehanstalten programmiert werden können.

Die bekannten Barcodes oder Strichcodierungen können zwar sehr einfach zusammen mit den übrigen Text- und Bildinformationen mit gewöhnlicher schwarzer Druckfarbe auf den gleichen Druckträger gedruckt und von einfachen Lichtgriffeln im sichtbaren Spektralbereich gelesen werden, sie beanspruchen jedoch verhältnismäßig viel Platz auf dem Druckträger, der für andere schriftliche oder bildliche Informationen nicht zur Verfügung steht. Im fortlaufenden Text einer Zeitschrift sind zwischen den einzelnen Text- und Bildabschnitten eingeschaltete Barcode-Flächen auch sehr störend, da sie die Lesbarkeit beeinträchtigen und einen für normales Lesen nicht tragbaren graphischen Aufbau bedingen.

Es ist auch bereits ein Verfahren und eine Vorrichtung der eingangs näher erläuterten Art bekannt (DE-OS 29 10 176), mit denen auf eine bedruckte Vorlage zweite Informationsträger aufgedruckt werden, die für das menschliche Auge unsichtbar sind, aber durch Bestrahlen mit ultraviolettem Licht sichtbar gemacht werden können. Bei dem bekannten Verfahren geschieht dies dadurch, daß auf die mit gewöhnlicher Druckfarbe bedruckten Druckträger nacheinander die kryptographen Informationen mit einem fluoreszierenden Material aufgedruckt und dann mit einem Klarlack abgedeckt werden, der als Schutzschicht dient und ein Abwischen des fluoreszierenden Materials verhindern soll.

Dieses bekannte Verfahren funktioniert nur dann, wenn das fluoreszierende Material oberhalb der Druckfarbe aufgebracht wird. Ferner ist es notwendig, den gesamten Druckträger, oder doch wenigstens einen so großen Teil davon mit Klarlack zu überziehen, daß die aus fluoreszierendem Material bestehende kryptographe Information vollständig abgedeckt wird. Hierbei werden erhebliche Mengen an Klarlack benötigt, wodurch das bekannte Verfahren sehr unwirtschaftlich ist und beispielsweise für Zeitschriften nicht eingesetzt werden kann.

Aufgabe der Erfindung ist es, alle möglichen Druckträger, darunter auch Zeitungen und Werbeschriften sowohl mit ohne weiteres lesbaren Text- und Bildinformationen als auch mit nicht ohne weiteres lesbaren codierten Informationen so zu bedrucken, daß sowohl die codierten Informationen als auch die uncodierten Informationen ohne gegenseitige Behinderung von menschlichen Augen, bzw. von dafür geeigneten Decodern gelesen werden können und wobei insbesondere die codierten Informationen keine zusätzliche Druckfläche beanspruchen. Ferner sollen beide Informationsarten besonders einfach und kostensparend aufgedruckt werden.

Diese Aufgaben werden mit der Erfindung bei einem Druckträger dadurch gelöst, daß die Druckfarben für das Lesegerät unsichtbar sind und der Stoff zum Aufdrucken der Informationsträger einer zweiten Informationsschicht ein fluoreszierender oder ein Infrarot-Strahlen absorbierender, verdruckbarer Klarlack ist, der im sichtbaren Spektralbereich keine Eigenabsorption aufweist.

Bei einem derart bedruckten Druckträger wird die normale Lesbarkeit der Text- und Bildinformationen durch die codierten Informationen nicht gestört oder beeinträchtigt, da die codierten und uncodierten Informationen sich in verschiedenen Informationsebenen befinden, von denen eine dem sichtbaren Spektralbereich und die andere dem unsichtbaren Spektralbereich angehört. Barcodes und andere auf dem Druckträger kryptographierte Informationen können nach der Erfindung nach einem normalen, bekannten Druckverfahren sowohl über als auch unter den lesbaren Text- und Bildinformationen auf den Druckträger aufgetragen sein, wo sie von einem Lesegerät lesbar, für das menschliche Auge aber nicht sichtbar sind.

Der zum Aufdrucken der Informationsträger der zweiten Informationsschicht verwendete, Infrarot-Strahlen absorbierende Klarlack enthält Farbstoffe, die durch einen oder mehrere vibronische Anregungszustände mit hoher Oszillatorenstärke im nahen Infrarot-Bereich von 780 nm bis 1500 nm ausgezeichnet sind und die im sichtbaren Spektralbereich keine oder nur schwache Elektronenanregungszustände aufweisen. Hierbei kann der druckfähige Klarlack vorzugsweise Si-Naphthalocyanin in einer molaren Konzentration von $10^{-2}$ bis $10^{-3}$ enthalten. Dieser Klarlack zum Aufdrucken der kryptographierten Codierungen hat keine Eigenabsorption im sichtbaren Spektralgebiet, so daß die codierten Informationen dem normalen menschlichen Auge unsichtbar bleiben, von den mit Infrarot-Strahlung arbeitenden Barcode-Lesern oder anderen Decodern aber einwandfrei gelesen werden können.

Zum Aufdrucken der Informationsträger der ersten Informationsschicht, d.h. der von menschlichen Augen lesbaren Buchstaben und Bilder, wird zweckmäßig eine Infrarot-Druckfarbe benutzt, die im nahen Infrarot-Bereich von 780 nm bis 1500 nm keine wirksame Eigenabsorption aufweist. Dies ist dann der Fall, wenn die Eigenabsorption der Infrarot-Druckfarbe höchstens 40 % beträgt, so daß diese Farbe für Infrarot-Strahlung mindestens 60 % durchlässig ist. Vorzugsweise sollten jedoch solche Infrarot-Druckfarben verwendet werden, die für ein mit Infrarot-Strahlung arbeitendes Lesegerät vollständig durchsichtig sind, also im nahen Infrarot-Bereich keine wirksame (störende) Eigenabsorption aufweisen. Diese Druckfarben, die als "Infrarot-Druckfarben" im Handel erhältlich sind, erscheinen dem menschlichen Auge als sichtbare Farben, sind aber, anders als gewöhnliche Druckfarben, für Infrarot-Strahlen vollständig oder nahezu vollständig durchlässig, so daß ein Infrarot-Lichtgriffel die mit den Infrarot-Druckfarben gedruckte erste Informationsschicht mit den für das menschliche Auge lesbaren Schriftzeichen und Bildern "durchschauen" kann. Dies hat den Vorteil, daß die uncodierten Informationen, d.h. die mit dem Auge lesbaren Schriftzeichen und Bilder und die codierten, kryptographen, d.h. nicht sichtbaren Informationen auch übereinander gedruckt werden können, wobei eine zweite Informationsschicht mit den Informationsträgern im unsichtbaren Spektralbereich unterhalb oder oberhalb der Informationsschicht für die Schriftzeichen und Bilder des sichtbaren Spektralbereiches liegen kann. Dies hat den Vorteil, daß die gesamte zur Verfügung stehende Druckfläche für lesbare Informationen augenutzt werden kann und die unsichtbare Codierung den lesbaren Texten oder Bildern räumlich genau zugeordnet werden kann. Dies ist insbesondere bei Programmzeitschriften von Vorteil, da der Leser eine von ihm gelesene Textinformation anschließend mit einem Infrarot-Lichtgriffel abtasten und damit die der gelesenen Information zugeordnete codierte Information erfassen und je nach Ausstattung des Gerätes nutzen kann. So ist es beispielsweise möglich, mit entsprechend ausgebildeten Infrarot-Lichtgriffeln Aufzeichnungs- und Abspielgeräte der Unterhaltungselektronik mit den Daten zu programmieren, die der Lichtgriffel beim Hinwegfahren über eine sichtbare Textinformation der darunter- oder darüberliegenden unsichtbaren Barcode-Information entnommen hat.

Ein weiteres Anwendungsgebiet der Erfindung ist das Aufdrucken von maschinenlesbaren Codierungen auf Verpackungen und Umhüllungen. Hier kann beispielsweise über eine Adresse auf einem Paket eine Codierung mit dem erfindungsgemäßen Klarlack gedruckt werden, die einen die Codierung aufnehmenden Decoder veranlaßt, den Transport des Paketes so zu steuern, daß es die gewünschte Adresse erreicht.

Ein weiteres Anwendungsgebiet sind Kryptoinformationen im Text- oder Bildteil eines mit Infrarot-Druckfarben gedruckten Kataloges oder Prospektes, die mit Hilfe eines Barcode-Lese- und Encoder-Stiftes zur Programmierung eines Tele-Bestellsystems von Warenversandhäusern od.dgl. benutzt werden können.

Der Stoff zum Aufdrucken der Informationsträger einer zweiten Informationsschicht kann auch ein druckfähiger Fluoreszenz-Klarlack sein, der im sichtbaren Spektralbereich keine Eigenabsorption aufweist. Soll diese zweite Informationsschicht über eine erste Informationsschicht mit Informationsträgern im sichtbaren Spektralbereich gedruckt werden, so muß die für diese Informationsträger verwendete Druckfarbe eine Ultraviolett-Druckfarbe sein, die jedenfalls im Ultraviolett-Anregungs- und Emissionsbereich des Fluoreszenzfarbstoffes keine wirksame Eigenabsorption aufweist.

Das erfindungsgemäße Verfahren zum Bedrukken eines Druckträgers mit mehreren Informationsschichten ist dadurch gekennzeichnet, daS die verschiedenen Informationsschichten zeitlich nacheinander passergenau auf den jeweils zu bedruckenden Oberflächen des Druckträgers übereinandergedruckt werden. Hierdurch wird die zur Verfügung stehende Druckfläche optimal ausgenutzt und es werden Fehlprogrammierungen vermieden, da die Lesegeräte beim Abtasten der sichtbaren Information die darunter-oder darübergedruckte unsichtbare Codierung in jedem Fall vollständig erfassen.

Die erste Informationsschicht kann derart über eine zweite Informationsschicht gedruckt werden, daß die Informationsträger der ersten Informationsschicht die Informationsträger der zweiten Informationsschicht mindestens teilweise überdecken. Es ist aber auch möglich, die zweiten Informationsschichten derart über die erste Informationsschicht zu drucken, daS die zweiten Informationsträger die ersten Informationsträger mindestens teilweise überdecken .

Bei bestimmten Druckträgern ist es erwünscht, wenn die zu bedruckende Druckfläche eine vom Papierweiß abweichende Grundfarbe, einen sogenannten "Fond" aufweist. Ein solcher Fond wird zweckmäßig vor dem Bedrucken mit den Informationsschichten auf die Oberfläche des Druckträgers mit einer von menschlichen Augen sichtbaren, aber für Lesegeräte des unsichtbaren Spektralbereiches nicht wahrnehmbaren Grundfarbe vorgedruckt.

Die erste Informationsschicht und die zweiten Informationsschichten können im Offset- oder Flexo-Druckverfahren aufgedruckt werden. Besonders zweckmäßig ist jedoch die Anwendung des Tiefdruckverfahrens, wobei Tiefdruck-Rollen-Rotationsmaschinen oder Tiefdruck-Bogendruckmaschinen besonders geeignet sind. Die Anwendung des Tiefdruckverfahrens hat den Vorteil, daß das Signal-Rausch-Verhältnis der unsichtbaren, codierten Informationen durch Veränderung der Druckviskosität und Formtiefe im Tiefdruck beeinflußt und ökonomisch sinnvoll gesteuert werden kann.

Man erkennt, daß durch Verwendung von Infrarot-Druckfarben für die sichtbaren Informationsträger und eines Infrarot-Strahlen absorbierenden Klarlackes für die unsichtbaren Informationsträger das Aufbringen beider Informationsschichten oder nur einer von ihnen auf der Schöndruck- und/oder Widerdruckseite eines beidseitig bedruckbaren Druckträgers möglich ist. Werden auf beiden Seiten des Druckträgers sowohl erste als auch zweite Informationsschichten aufgedruckt, muß der Druckträger selbst "dicht" sein, d.h., er darf keine Strahlung des unsichtbaren Spektralbereiches durchlassen, da sonst die Lesegeräte beim Lesen der codierten Informationen auf einer Seite des Druckträgers von den codierten Informationen auf der gegenüberliegenden Seite des Druckträgers irritiert werden.

Das erfindungsgemäße Verfahren kann nicht nur zum Eindrucken von maschinenlesbaren Codierungen in Zeitschriften oder zum Aufdrucken von Codierungen auf Verpackungen und Umhüllungen verwendet werden, sondern es eignet sich auch zum Eindrucken von kryptographierten Kennzeichen in Geldscheine, Wertpapiere od.dgl., wo die mit Infrarot- bzw. Ultraviolett-Druckfarben bedruckten Bild-, Text-, Guillochen- und Fond-Partien des zu schützenden Wertpapieres mit den nicht ohne weiteres lesbaren Kennzeichen überdruckt werden können.

Weitere Merkmale und Vorteile der Erfindung ergeben sich aus der nachfolgenden Beschreibung von bevorzugten Ausführungsformen der Erfindung, die durch die Zeichnung an Beispielen näher erläutert sind. Es zeigt:

Fig. 1 ein Paket mit einem aufgeklebten Druckträger, der nach der Erfindung bedruckt ist, in einer perspektivischen Darstellung;

Fig. 2 den Druckträger auf dem Paket nach Fig. 1 in einem Längsschnitt nach Linie II-II in stark vergrößertem Maßstab;

Fig. 3 eine Programmzeitschrift mit beidseitig bedruckten Blättern, welche die Druckträger bilden und

Fig. 4 ein Blatt der Zeitschrift nach Fig. 3 mit zwei beidseitig bedruckten Seiten in einem Querschnitt nach Linie IV-IV in einem stark vergrößertem Maßstab.

In der Zeichnung ist mit 10 ein Paket bezeichnet, auf dessen Oberseite ein Druckträger 11 in Form eines Adressenzettels aufgeklebt ist. Der Druckträger 11 besteht aus Papier und hat eine bedruckte Oberfläche 12, auf die eine erste Informationsschicht 13 und eine zweite Informationsschicht 14 übereinanderliegend aufgedruckt sind. Die erste Informationsschicht 13 enthält erste Informationsträger 15a in Form von Buchstaben und Zahlen und 15b in Form von Bildern, während die darunterliegende zweite Informationsschicht 14 zweite Informationsträger 16 in Form von Barcodes, d.h. Strichcodierungen enthält.

Die Buchstaben und Zahlen 15a und die Bilder 15b der ersten Informationsschicht sind mit Ultraviolett-Druckfarben, die im Ultraviolett-Anregungsbereich und im Emissionsbereich des Fluoreszenzfarbstoffes keine wirksame Eigenabsorption aufweisen, über die Informationsträger 16 der zweiten Informationsschicht 14 gedruckt, die mit einem druckfähigen Klarlack, der im sichtbaren Spektralbereich keine Eigenabsorption aufweist, unmittelbar auf die Druckfläche 12 des Druckträgers 11 gedruckt sind.

Da die UV-Druckfarben, mit denen die ersten Informationsträger gedruckt sind, von dem menschlichen Auge als sichtbare Farben gesehen werden, ist die aufgedruckte Adresse ohne weiteres lesbar. Die Informationsträger 16 der darunterliegenden zweiten Informationsschicht 14 sind jedoch für menschliche Augen unsichtbar, da sie mit einem Klarlack aufgedruckt sind, der im sichtbaren Spektralbereich keine Eigenabsorption aufweist. Die mit diesem UV-Klarlack in Form von Barcodes 16 aufgedruckten codierten Informationen können aber von einem nicht dargestellten UV-Lesegerät gelesen werden, welches oberhalb des Paketes 10 angeordnet ist und die mit den UV-Druckfarben überdruckten Informationsträger 15a der ersten Informationsschicht 13 "durchschaut".

Die von dem Lesegerät aus der zweiten Informationsschicht 14 aufgenommenen Daten können von einem nachgeschalteten Auswertegerät in Steuerbefehle umgewandelt werden, die beispielsweise die Transportmittel steuern, mit denen das Paket 10 zu dem auf der Adresse angegebenen Zielort geleitet wird.

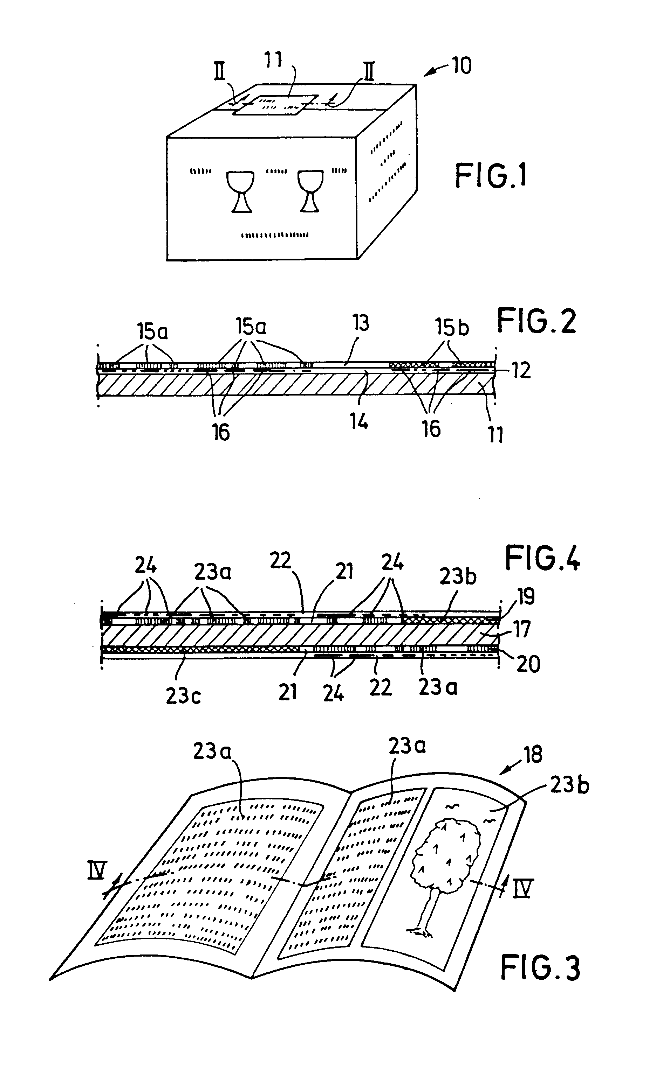

Bei dem in den Fig. 3 und 4 dargestellten Ausführungsbeispiel bilden die Blätter 17 einer Fernsehprogrammzeitschrift 18 die Druckträger, deren Vorderseiten 19 und Rückseiten 20 Druckflächen bilden, die im Schöndruck bzw. Widerdruck bedruckt sind. Die Blätter 17 der Programmzeitschrift 18 bestehen aus einem für Infrarot-Strahlen undurchlässigen Papier und sind sowohl auf ihrer vorderen Druckfläche 19 als auch auf ihrer rückseitigen Druckfläche 20 mit je zwei übereinander gedruckten Informationsschichten 21 und 22 bedruckt. Die im Schöndruck bzw. Widerdruck unmittelbar auf die Oberflächen 19 und 20 des Druckträgers 17 aufgedruckten ersten Informationsschichten 21 enthalten als Informationsträger mit menschlichen Augen lesbare Schriftzeichen 23a und Bilder 23b, wobei das Bild auch ein einfacher Fond 23c, sogar eine schwarze Volltonfläche 23c sein kann. Die Informationsträger 23a bis 23c der ersten Informationsschicht 21 sind bei dem in den Fig. 3 und 4 dargestellten Ausführungsbeispiel mit handelsüblichen Infrarot-Druckfarben gedruckt. Diese Infrarot-Druckfarben haben im nahen Infrarot-Bereich von 780 nm bis 1500 nm keine Eigenabsorption, erscheinen aber im sichtbaren Spektralbereich als natürliche Farben, so daß sie von menschlichen Augen ohne weiteres gelesen werden können.

Die Informationsträger 23a bis 23c der ersten Informationsschichten 21 sind mit den Informationsträgern 24 auf der linken Hälfte der oberen Druckfläche 19 und auf der rechten Hälfte der unteren Druckfläche 20 passergenau übereinandergedruckt.Die Informationsträger 24 der zweiten Informationsschichten 22 nehmen also hier die gleichen Flächen ein, wie die darunterliegenden Informationsträger 23a der ersten Informationsschicht 21. Die linke Hälfte der unteren Druckfläche 20 weist keine Informationsträger der zweiten Informationsschicht auf, während die rechte Hälfte der oberen Druckfläche 19 derart mit Informationsträgern 24 der zweiten Informationsschicht 22 bedruckt ist, daß diese die ersten Informationsträger 23b der ersten Informationsschicht 21 nur teilweise überdecken und teilweise neben diese gedruckt sind.

Die Informationsträger 24 der zweiten Informationsschicht 22 sind als Barcodes mit einem handelsüblichen Infrarot-Klarlack gedruckt. Dieser Klarlack enthält Infrarot-Strahlen absorbierende Farbstoffe, z.B. Si-Naphthalocyanin, die durch einen oder mehrere Elektronenübergänge mit hoher und schmalbandiger Extinction im nahen Infrarot-Bereich von 780 nm bis 1500 nm ausgezeichnet sind, die aber im sichtbaren Spektralbereich überhaupt keine oder nur schwache Elektronen-Anregungszustände haben. Die mit diesem Infrarot-Klarlack aufgetragenen Barcodes 24 sind deshalb im sichtbaren Spektralbereich durchsichtig, so daß sie die Lesbarkeit der darunter angeordneten Schriftzeichen 23a und Bilder 23b nicht beeinträchtigen, andererseits aber von einem Infrarot-Lesegerät, beispielsweise einem Infrarotlicht-Barcode-Lesestift mit einer Wellenlänge von 780 nm mit einem Bandpass von 20 nm ohne weiteres "gelesen" werden können, wenn dieser Lesestift über die bedruckte Fläche geführt wird, deren Größe durch die passergenau unterschichtete sichtbare Schrift- oder Bildfläche der ersten Informationsschicht genau erfaßt werden kann. Die aus den unsichtbaren Barcodes erfaßten Daten können bei entsprechender Ausbildung des Infrarot-Lesestiftes gespeichert und sofort oder später zum Programmieren von Aufzeichnungs- und Abspielgeräten, wie Video-Recordern, Cassettendecks od.dgl. benutzt werden. Der Leser der Programmzeitschrift 18 kann also den in sichtbarer Schrift 23a gedruckten Text nicht nur lesen, sondern ohne weiteres in seinem entsprechend ausgebildeten Infrarot-Barcode-Lesestift speichern und seine Aufnahme- und Wiedergabegeräte so programmieren, daß diese sich zur rechten Zeit selbsttätig in die Programmfolge einschalten und aus dieser wieder ausschalten.

Es ist darauf hinzuweisen, daß es sich bei den in den Fig. 2 und 4 mit durchgehenden Doppellinien gezeichneten Informationsschichten 13 und 14 bzw. 21 und 22 natürlich nicht um vollflächige Beschichtungen der Druckträger 11 bzw. 17 handelt, sondern daß nur die Informationsträger der jeweiligen "Informationsschicht", d.h. die aufgedruckten, sichtbaren Buchstaben, Zahlen und Bilder bzw. die aufgedruckten, unsichtbaren Striche, Punkte oder anderen Codierungen der "zweiten Informationsschichten" auf dem Druckträger vorhanden sind. Nur dort, wo sich auf der Druckfläche Informationsträger der ersten Informationsschicht befinden, liegen die Informationsträger der zweiten Informationsschicht über den ersten Informationsträgern, während sie überall dort, wo keine Informationsträger der ersten Informationsschicht vorhanden sind, natürlich unmittelbar auf der Druckfläche haften.

Die Blätter 17 der Programmzeitschrift 18 werden bei dem in den Fig. 3 und 4 dargestellten Ausführungsbeispiel nach dem erfindungsgemäßen Verfahren im Tiefdruck-Rotationsverfahren zunächst auf ihrer Schöndruckseite 19 und anschließend auf ihrer Widerdruckseite 20 mit sichtbarer Schrift und sichtbaren Bildern in Infrarot-Druckfarben der oben näher erläuterten Art bedruckt. Danach wird die so bedruckte Bahn in einem sich unmittelbar anschließenden Durchlauf auf der Schöndruckseite 19 und anschließend auf der Widerdruckseite 20 passergenau mit Barcodes überdruckt, wofür ein tiefdruckfähiger Infrarot-Klarlack der oben näher erläuterten Spezifikation verwendet wird.

Zur Demonstration der Wirksamkeit der verwendeten Infrarot-Druckfarben und Klarlacke auch unter ungünstigsten Voraussetzungen wird folgendes Beispiel angegeben:

Auf einer Tiefdruck-Rollen-Rotationsmaschine wird auf der Schöndruckseite eine schwarze Schrift und auf der der Schrift gegenüberliegenden Widerdruckseite der Papierbahn eine schwarze Volltonfläche aufgedruckt. Der Druck der schwarzen Schrift und der schwarzen Widerdruck-Volltonfläche erfolgt unter tiefdrucküblichen Bedingungen aus einem volltontiefen Druckzylinder unter Verwendung einer oben erwähnten, schwarzen Infrarot-Druckfarbe.

Die schwarz vorgedruckte Schrift wird dann anschließend in einem ununterbrochenen Druckvorgang passergenau mit Barcodes überdruckt. Für diesen Druck wird ein tiefdruckfähiger Klarlack verwendet, der Si-Naphthalocyanin in der molaren Konzentration von $10^{-2}$ bis $10^{-3}$ aufweist und mit Toluol auf eine beim Tiefdruck übliche Druckviskosität von z.B. 25 bis 22 Auslaufsekunden in 3-mm-Auslaufbecher nach DIN 53211 verdünnt. Der Druck erfolgt aus einer elektromechanisch gravierten Tiefdruckform der Mindestformtiefe 32 Mikrometer, die für den Druck dieses IR-Klarlackes geeignet ist, mit einer Druckgeschwindigkeit von 50.000 U/Std.

Bei dem so hergestellten Druck-Erzeugnis ist die in schwarzer Infrarot-Druckfarbe vorgedruckte Schrift durch die übergedruckten Barcodes nicht beeinträchtigt, sondern klar lesbar und die mit dem Infrarot-Klarlack übergedruckten Krypto-Informationen können mit einem Barcode-Lesestift bei einer Wellenlänge von 780 nm mit einem Bandpass von 20 nm ohne weiteres gelesen werden. Das Signal-Rausch-Verhältnis des Nutzsignales beträgt bei diesem Demonstrationsbeispiel mindestens S/N = 3.

Man erkennt, daß das Spektralgebiet der Detektion sowie die Steuerung der Signaldynamik in breiten Grenzen durch Wahl des jeweiligen Absorbers im Klarlack und durch die Einstellung der jeweiligen Druckparameter verschoben werden kann.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise könnten auch mehrere zweite Informationsschichten mit Informationsträgern aufgedruckt werden, die verschiedenen unsichtbaren Spektralgebieten angehören und mit diesen Spektralgebieten angepaßten Lesegeräten gelesen werden können. In diesem Falle müßten jedoch die Druckfarben des sichtbaren Spektralbereiches für die beiden unsichtbaren Spektralbereiche mindestens soweit durchsichtig sein, daß sie die Lesbarkeit der Krypto-Informationen nicht beeinträchtigen. Ferner können die Barcodes auch unter die sichtbare Druckinformation gedruckt werden und es ist auch möglich, sie nachträglich auf bereits an anderer Stelle mit lesbarer Schrift vorgedruckte Druckträger aufzudrukken. Schließlich können die Druckträger auch mit Tiefdruck-Bogendruckmaschinen oder im Offset-Druck, Flexo-Druck, Siebdruck-oder im Inkjet-Verfahren in der erfindungsgemäßen Weise bedruckt werden.

**Patentansprüche**

1. Druckträger mit mindestens einer bedruckten Oberfläche (Druckfläche), die mindestens zwei übereinander und/oder nebeneinander gedruckte Informationsschichten aufweist, von denen die erste Informationsschicht für das menschliche Auge sichtbare, aus Druckfarben bestehende erste Informationsträger enthält und von denen mindestens eine zweite Informationsschicht für ein Lesegerät des unsichtbaren Spektralbereiches erkennbare, aus einem druckfähigen Stoff bestehende, zweite Informationsträger aufweist, wobei der druckfähige Stoff für das menschliche Auge weitgehend oder vollständig unsichtbar ist, **dadurch gekennzeichnet,** daß die Druckfarben für das Lesegerät unsichtbar sind und der Stoff zum Aufdrucken der Informationsträger (24) einer zweiten Informationsschicht (22) ein fluoreszierender oder ein Infrarot-Strahlen absorbierender, verdruckbarer Klarlack ist, der im sichtbaren Spektralbereich keine Eigenabsorption aufweist.

2. Druckträger nach Anspruch 1, **dadurch gekennzeichnet,** daß der Infrarot-Strahlen absorbierende Klarlack Farbstoffe enthält, die durch einen oder mehrere vibronische Anregungszustände mit hoher Oszillatorenstärke im nahen Infrarot-Bereich von 780 nm bis 1500 nm ausgezeichnet sind und die im sichtbaren Spektralbereich keine oder nur schwache Elektronen-Anregungszustände aufweisen.

3. Druckträger nach Anspruch 2, **dadurch ge-**

**kennzeichnet,** daß der druckfähige Klarlack Si-Naphthalocyanin in einer molaren Konzentration von $10^{-2}$ bis $10^{-3}$ enthält.

4. Druckträger nach einem der Ansprüche 1 bis 3, **dadurch gekennzeichnet,** daß die Druckfarbe zum Aufdrucken der Informationsträger (23a, 23b, 24c) der ersten Informationsschicht (21) eine Infrarot-Druckfarbe ist, die im nahen Infrarot-Bereich von 780 nm bis 1500 nm keine wirksame Eigenabsorption aufweist.

5. Verfahren zum Bedrucken eines Druckträgers mit mehreren Informationsschichten nach einem der Ansprüche 1 bis 4, **dadurch gekennzeichnet,** daß die verschiedenen Informationsschichten (14, 13 oder 21, 22) zeitlich nacheinander passergenau auf der jeweils zu bedruckenden Oberfläche (12 oder 19 oder 20) des Druckträgers (11 bzw. 17) übereinander gedruckt werden.

6. Verfahren nach Anspruch 5, **dadurch gekennzeichnet,** daß die erste Informationsschicht derart über eine zweite Informationsschicht gedruckt wird, daß die Informationsträger (15a, 15b) der ersten Informationsschicht (13) die Informationsträger (16) der zweiten Informationsschicht (14) mindestens teilweise überdecken.

7. Verfahren nach Anspruch 5, **dadurch gekennzeichnet,** daß die zweiten Informationsschichten (22) derart über die erste Informationsschicht (21) gedruckt werden, daß die zweiten Informationsträger (24) die ersten Informationsträger (23a, 23b) mindestens teilweise überdecken.

8. Verfahren nach einem der Ansprüche 5 bis 7, **dadurch gekennzeichnet,** daß mindestens ein Teil der jeweils zu bedruckenden Oberfläche des Druckträgers vor dem Bedrucken mit den Informationsschichten mit einer von menschlichen Augen sichtbaren, aber für Lesegeräte des unsichtbaren Spektralbereiches nicht wahrnehmbaren Grundfarbe (Fond) (23c) vorgedruckt wird.

9. Verfahren nach einem der Ansprüche 5 bis 8, **dadurch gekennzeichnet,** daß die erste Informationsschicht (13 bzw. 21) und die zweiten Informationsschichten (14 bzw. 22) im Tiefdruck-Verfahren aufgedruckt werden.

10. Verwendung des Verfahrens nach einem der Ansprüche 5 bis 9 zum Eindrucken von maschinenlesbaren Codierungen in Zeitschriften.

11. Verwendung des Verfahrens nach einem der Ansprüche 5 bis 9 zum Aufdrucken von maschinenlesbaren Codierungen auf Verpackungen und Umhüllungen.

12. Verwendung des Verfahrens nach einem der Ansprüche 5 bis 9 zum Eindrucken von kryptographierten Kennzeichen in Geldscheine oder Wertpapiere.

FIG.1

FIG.2

FIG.4

FIG.3